# EUROPEAN PATENT APPLICATION

(11) **EP 4 585 772 A1**
(43) Date of publication of application: **16.07.2025**
(21) Application number: 23861772.4
(22) Date of filing: 04.01.2023
(51) Int. Cl.: E04H 4/16

(54) **FLOATING DEVICE AND SWIMMING POOL CLEANING ROBOT**

(30) Priority: 09.09.2022 CN 202211099591; 27.09.2022 CN 202211182308
(71) Applicant: Coclean Technologies, Co., Ltd., Jiangsu 215104 (CN)
(72) Inventor: ZHONG, Liang, Suzhou, Jiangsu 215104 (CN); LI, Hongyu, Suzhou, Jiangsu 215104 (CN); ZHAO, Ye, Suzhou, Jiangsu 215104 (CN); ZHAO, Fei, Suzhou, Jiangsu 215104 (CN)
(74) Representative: Maidment, Marc
(86) International application number: PCT/CN2023/070443
(87) International publication number: WO 2024/051059

(57) **Abstract**

The present disclosure discloses a floating device and a swimming pool cleaning robot. The floating device includes a floating housing (110) and a wireless transmission module (130). The floating housing (110) is provided with a handle (120), whose top is higher than the floating housing (110). The wireless transmission module (130) is provided in the top of the handle (120). The floating device can be easily lifted by means of the handle, and can remotely transmit instructions to the wireless transmission module by means of a remote control, etc., so that it is easier to use the device and the cleaning efficiency is improved.

## Description

### TECHNICAL FIELD

The present disclosure relates to the technical field of swimming pool cleaning, and in particular, to a floating device and a swimming pool cleaning robot.

### BACKGROUND

The water in swimming pools needs to be cleaned regularly. Swimming pool cleaning robots are proposed to clean up contaminants in swimming pools. The swimming pool cleaning robots are mainly divided into two categories in the prior art. A cleaning device in the first category is connected to a power supply through a power cable, and works underwater while traveling with the power cable dragged thereby. When this kind of robots works, the power cable tends to get tangled to affect normal work, and the power cable needs to be stored, and thus such robots are quite inconvenient to use. The other category refers to a kind of wireless robots that travel without dragging the power cable and are provided with a power supply assembly for supplying power to the robot. This kind of robots cannot perform intelligent cleaning path planning, and the user cannot acknowledge its working status in time, although the convenience in using this kind of robots is improved, and thus there is still convenience in using this kind of robots, and this kind of robots still perform cleaning in low efficiency.

### BRIEF SUMMARY

A first objective of the present disclosure is to provide a floating device, to address the technical problems of the swimming pool cleaning robots in the prior art that are inconvenient to use and low in cleaning efficiency.

The floating device provided by the present disclosure includes a floating base and a wireless transmission module encapsulated in the floating base.

Optionally, the floating base has a protruding portion protruding from its upper surface, and the wireless transmission module is encapsulated in the protruding portion.

Optionally, the floating device further includes a first power supply assembly which is encapsulated in the floating base and electrically connected to the wireless transmission module.

Optionally, the floating base is of a housing structure including a first upper shell and a first cavity shell, the first cavity shell is sealed and fixed to a lower surface of the first upper shell, and the first power supply assembly is disposed within a sealed cavity enclosed by the first upper shell and the first cavity shell.

Optionally, a first sealing ring is provided between the first cavity shell and the first upper shell.

Optionally, the power supply assembly is disposed in a central portion of the floating base.

Optionally, the floating base further includes a first lower shell which has a shape of frame, surrounds the first cavity shell and is fixedly connected to the first upper shell.

Optionally, the first lower shell is provided with a lower recess with its inner side higher than its outer side, and the inner side of the lower recess is sealed and connected to the first upper shell.

Optionally, a second sealing ring is provided between the inner side of the lower recess and the first upper shell.

Optionally, a first solar panel is provided on the upper surface of the floating base, the first solar panel is electrically connected to the first power supply assembly.

Optionally, the floating base is provided with at least one charging port configured to be used in charging the first power supply assembly.

Optionally, the charging ports are contact-type charging ports or non-contact-type charging ports.

Optionally, the charging ports are disposed on an upper surface of the floating base.

Optionally, the charging ports are disposed on a lower surface of the floating base.

Optionally, the wireless transmission module is encapsulated in a top portion of the protruding portion.

Optionally, the protruding portion has a hollow structure at the top portion, and the wireless transmission module is disposed within the hollow structure of the top portion of the protruding portion.

Optionally, the protruding portion includes a second upper shell and a second lower shell fixedly connected to the second upper shell, the second lower shell is fixedly connected to the floating base, and the wireless transmission module is encapsulated in a hollow structure enclosed by the second upper shell and the second lower shell.

Optionally, the protruding portion has a U-shaped handle structure with an opening facing downwards, and the hollow structure of the protruding portion is disposed in a middle connecting section of the U-shaped handle structure.

Optionally, the wireless transmission module includes at least one of a WIFI module, a Bluetooth module, and a ZigBee module.

Optionally, the floating device further includes a first main control board which is communicatively connected to the wireless transmission module and electrically connected to the first power supply assembly.

Optionally, the first main control board is encapsulated within the floating base.

Optionally, the floating device further includes a first main control board, the wireless transmission module is communicatively connected to the first main control board, and the first main control board is electrically connected to the first power supply assembly.

The floating device provided by the present disclosure may have the following beneficial effects:
The floating device provided by the present disclosure can be easily lifted by means of the handle. Moreover, the floating device provided by the present disclosure has a wireless communication function so as to remotely transmit instructions to the wireless transmission module by means of a remote control, etc., to control the traveling and working state of the cleaning device of the swimming pool cleaning robot, so as to perform intelligent cleaning path planning such as cleaning path planning for a swimming pool in a special shape, and further to acknowledge the working position and working state of the swimming pool cleaning robot, etc. in time, and thus the convenience in using and the cleaning efficiency may be improved. The wireless transmission module is disposed at the top of the handle and is higher than the floating housing, so that there is less surrounding interference and signal strength is improved, to ensure the effectiveness and stability of signal transmission.

A second objective of the present disclosure is to provide a swimming pool cleaning robot, so as to address the technical problems of the swimming pool cleaning robots in the prior art that are inconvenient to use and low in cleaning efficiency.

The swimming pool cleaning robot provided by the present disclosure includes the floating device as described above, a cleaning device, and a connecting cable, a first power supply assembly of the floating device is connected to the cleaning device via the connecting cable;
The floating device includes a floating base and a wireless transmission module, the floating base has a protruding portion protruding from its upper surface, and the wireless transmission module is encapsulated in the protruding portion.

Optionally, the cleaning device includes a cleaning housing which is provided with a first cable through hole;
A motor assembly is provided in the cleaning housing, the motor assembly includes a motor box, a travel motor and a water pump motor is mounted in the motor box, and the motor box is provided with a second cable through hole;
The connecting cable passes through the first cable through hole and the second cable through hole and is connected to the travel motor and the water pump motor.

Optionally, the motor box includes a box body and a box cover, both of which are provided with end faces and circumferential faces that fit together, a first axial sealing ring is provided between the end faces that fit together, and a radial sealing ring is provided between the circumferential faces that fit together.

Optionally, a fixing joint is provided on an outer side of the second cable through hole, the fixing joint is configured to fix the connecting cable.

Optionally, a charging port of the swimming pool cleaning robot is a contact-type charging port or a non-contact-type charging port.

The swimming pool cleaning robot provided by the present disclosure has all the beneficial effects of the floating device as described above, and therefore will not be described in detail here.

A further objective of the present disclosure is to provide a floating platform, so as to address the technical problems in the prior art that there are too many steps for initializing the floating platform, and there is high possibility for operator to forget the steps, the operation is complicated and operation efficiency is low.

The floating platform provided by the present disclosure includes a floating body, and a switch assembly and an antenna assembly provided on the floating body, the switch assembly is configured to control a working state of an electronic control system of the floating platform, and an antenna of the antenna assembly is configured to enhance the strength of signals for transceiving data; the switch assembly is in transmission connection with a linkage mechanism, when the switch assembly is in an off-state, the linkage mechanism is connected to the antenna assembly to restrict the antenna to a retracted state; the switch assembly can drive the linkage mechanism to move, when being switched to an on-state from the off-state, so as to release the restriction on the antenna.

Optionally, the antenna assembly includes an elastic member which acts between the floating body and the antenna so that the antenna maintains a constant tendency to unfold; the linkage mechanism includes a first limit portion which is configured to restrict the antenna to the retracted state; the switch assembly includes a movable portion provided with a movable contact, the movable portion may is configured to drive the linkage mechanism to move, when the switch assembly is switched to an on-state from the off-state so that the first limit portion is detached from the antenna and the antenna is unfolded under the action of the elastic member.

Optionally, the linkage mechanism further includes a drive portion and a linkage member, the drive portion is fixedly disposed to the movable portion, the first limit portion is fixedly disposed to the linkage member, and the linkage member has a guide surface; the drive portion abuts against the guide surface and is configured to move along the guide surface to push the linkage member to move, when the switch assembly is switched to an on-state from the off-state, so that the direction of movement of the movable portion forms an angle with the direction of movement of the first limit portion being detached from the antenna.

Optionally, the movable portion is fixedly connected to the first limit portion, and when the switch assembly is switched to an on-state from the off-state, the direction of movement of the movable portion is consistent with the direction of movement of the first limit portion being detached from the antenna.

Optionally, the switch assembly further includes a switch box in which the movable portion is provided, with an operating portion of the movable portion exposed; the linkage member is a slider on which the first limit portion is fixedly provided, the slider is disposed within the switch box and configured to move in the direction of movement of the first limit portion being detached from the antenna; when the antenna is in the retracted state, the first limit portion extends outside the switch box and is connected to the antenna; the movable portion has a drive protrusion protruding from its outer side wall to form the drive portion; the slider is provided with a slide groove which is configured to form the guide surface with a groove wall against which the drive protrusion abuts, and the drive protrusion is disposed within the slide groove and may move along the slide groove and push the slider to move in the direction of the first limit portion being detached from the antenna, when the switch assembly is switched to an on-state from the off-state.

Optionally, one of the switches boxes and the slider is provided with at least one guide post, and the other is provided with at least one guide groove, the guide grooves is configured to extend in the direction of movement of the first limit portion, and the guide posts are inserted in correspondence with the guide grooves.

Optionally, the movable portion is a press-type movable portion with its press position exposed above the floating body, the movable portion can move in a vertical direction, and the first limit portion can move in a horizontal direction.

Optionally, the movable portion is a toggle-type movable portion with its toggle position exposed on the side of the floating body, the movable portion can move in the vertical direction, and the first limit portion can move in the horizontal direction.

Optionally, the linkage mechanism further includes a first reset member which is disposed within the switch box, connected between an inner wall of the switch box and the slider, and configured to reset the slider in a direction opposite to the direction of movement of the first limit portion being detached from the antenna.

Optionally, the switch assembly further includes a second reset member which is disposed within the switch box, connected between the inner wall of the switch box and the movable portion, and configured to reset the movable portion in a direction opposite to the direction of movement of the switch assembly when closed.

Optionally, the antenna is rotatably provided on the floating body, and the elastic member of the antenna assembly is a torsion spring which is connected between the floating body and the antenna and configured to make the antenna maintain a constant tendency to rotate and spring up to an unfolded state.

Optionally, the antenna is provided with a second limit portion which cooperates with the linkage mechanism to make the antenna in the retracted state.

Optionally, one end of the antenna in its axial direction is connected to the floating body, and the second limit portion is disposed at the other end of the antenna in its axial direction.

Optionally, the second limit portion is a stopper.

Optionally, the antenna is telescopically mounted to the floating body, and the elastic member of the antenna assembly is configured to make a telescoping portion of the antenna maintain a constant tendency to be extended and unfolded in the vertical direction.

Optionally, the floating platform further includes a housing and a second power supply assembly, the second power supply assembly is disposed within the housing and located at a geometric center of the bottom.

Optionally, the housing has an arc-shaped outer side of the bottom.

Optionally, the floating platform further includes a second solar panel which is disposed on the top of the floating body, connected to the second power supply assembly, and configured to charge the second power supply assembly.

The floating platform provided by the present disclosure may have the following beneficial effects:
In the floating platform provided by the present disclosure, a floating body is provided with a switch assembly and an antenna assembly. The antenna of the antenna assembly can enhance the strength of signals for transceiving data, so that the stability of remote wireless signal transmission may be improved, and the entire device may work in a normal state. When the switch assembly is in an off-state, a linkage mechanism in transmission connection therewith can restrict the antenna to a retracted state, to prevent the antenna from being damaged or broken easily, and the floating platform occupies a small space and is convenient for storage when the antenna is in the retracted state. When the switch assembly is switched to an on-state from the off-state, the switch assembly may not only control the working state of the electronic control system to initialize the electronic control system, but also release the restriction on the antenna by means of the linkage mechanism, that is, the antenna may be unfolded without additional operations on the antenna separately, so that the function of the switch assembly may be improved, and the steps for initializing the floating platform may be reduced, and the problem of the operator forgetting the steps for initializing the floating platform may be addressed, to achieve a simple and efficient initializing operation.

A further objective of the present disclosure is to provide a swimming pool cleaning robot, so as to address the technical problems in the prior art that there are too many steps in initializing the floating platform, and there is high possibility for operator to forget the steps, the operation is complicated and operation efficiency is low.

The swimming pool cleaning robot provided by the present disclosure has all the advantages of the above floating platform, which therefore will not be described in detail here.

### BRIEF DESCRIPTION OF THE DRAWINGS

In order to more clearly illustrate the embodiments of the present disclosure or the technical solutions in the prior art, the accompanying drawings required for use in the embodiments or the description of the prior art will be briefly introduced below. Obviously, the accompanying drawings described below are only embodiments of the present disclosure. For those of ordinary skill in this field, other accompanying drawings can also be obtained based on the provided accompanying drawings without creative work.
Fig. 1 is a schematic structural diagram of a swimming pool cleaning robot provided by an embodiment of the present disclosure;
Fig. 2 is a schematic structural diagram of the swimming pool cleaning robot provided by an embodiment of the present disclosure, without showing a first solar panel;
Fig. 3 is an exploded schematic diagram of a floating device provided by an embodiment of the present disclosure;
Fig. 4 is a longitudinal cross-sectional schematic diagram of a motor assembly of the swimming pool cleaning robot provided by an embodiment of the present disclosure;
Fig. 5 is an enlarged view of the part labeled with A in Fig. 4;
Fig. 6 is a top view of a partial structure of a floating platform provided by an embodiment of the present disclosure;
Fig. 7 is an exploded schematic diagram of the partial structure of the floating platform provided by an embodiment of the present disclosure;
Fig. 8 is a partial side view of a switch assembly and a linkage mechanism of the floating platform provided by an embodiment of the present disclosure;
Fig. 9 is a rear view of a slider of the floating platform provided by an embodiment of the present disclosure;
Fig. 10 is a schematic side cross-sectional view of the partial structure of the floating platform provided by an embodiment of the present disclosure;
Fig. 11 is an enlarged view of the part labeled with B in Fig. 10;
Fig. 12 is a schematic structural diagram of an antenna assembly of the floating platform provided by an embodiment of the present disclosure;
Fig. 13 is a second schematic side cross-sectional view of the partial structure of the floating platform provided by an embodiment of the present disclosure;
Fig. 14 is an enlarged view of the part labeled with C in Fig. 13;
Fig. 15 is a second exploded schematic diagram of the partial structure of the floating platform provided by an embodiment of the present disclosure;
Fig. 16 is a third schematic side cross-sectional view of the partial structure of the floating platform provided by an embodiment of the present disclosure; and
Fig. 17 is an enlarged view of the part labeled with D in Fig. 16.

### Reference numerals:

100-floating device; 101-floating base; 102-protruding portion; 110-floating housing; 111-first upper shell; 112-first lower shell; 1121-lower recess; 113-first cavity shell; 114-first sealing ring; 115-second sealing ring; 116-charging port; 117-first solar panel; 120-handle; 121-second upper shell; 122-second lower shell; 130-wireless transmission module; 140-first power supply assembly; 150-first main control board; 200-connecting cable; 300-cleaning device; 310-cleaning housing; 311-first cable through hole; 320-motor assembly; 330-motor box; 331-box body; 332-first accommodating groove; 333-first axial sealing ring; 335-box cover; 336-second accommodating groove; 337-first radial sealing ring; 339-second cable through hole; 340-fixing joint; 350-travel motor; 351-third sealing ring; 360-water pump motor; 361-fourth sealing ring; 370-second main control board; 400-floating platform; 410-upper cover; 411-second radial sealing ring; 412-second solar panel; 420-lower shell; 422-cable connector; 424-second axial sealing ring; 500-switch assembly; 510-first front cover; 511-first guide post; 511'-second guide post; 520-first rear cover; 530-movable portion; 531-main body; 532-first limit ring; 533-second limit ring; 534-drive protrusion; 540-slider; 541-slide groove; 542-guide surface; 543-first limit portion; 544-chamfer; 545-first guide groove; 545'-second guide groove; 546-mounting post; 550-first reset member; 560-second reset member; 570-silicone member; 580-first electronic control board; 600-antenna assembly; 611-second front cover; 612-second rear cover; 613-rotating shaft; 614-clamp; 615-second limit portion; 620-torsion spring; 630-sealing ring; 700-second power supply assembly; 710-battery box; 720-battery pack.

### DETAILED DESCRIPTION

In order to make the above objectives, features and advantages of the present disclosure more obvious and easier to understand, specific embodiments of the present disclosure are described in detail below in conjunction with the accompanying drawings. It should be understood that the specific embodiments described here are only used to explain, rather than limiting, the present disclosure.

An Embodiment of the present disclosure provides a floating device 100, applied to a swimming pool robot. When in use, by connecting the cable of the floating device 100 to a cleaning device 300, the floating device 100 floats on the water surface, and the cleaning device 300 cleans underwater portions.

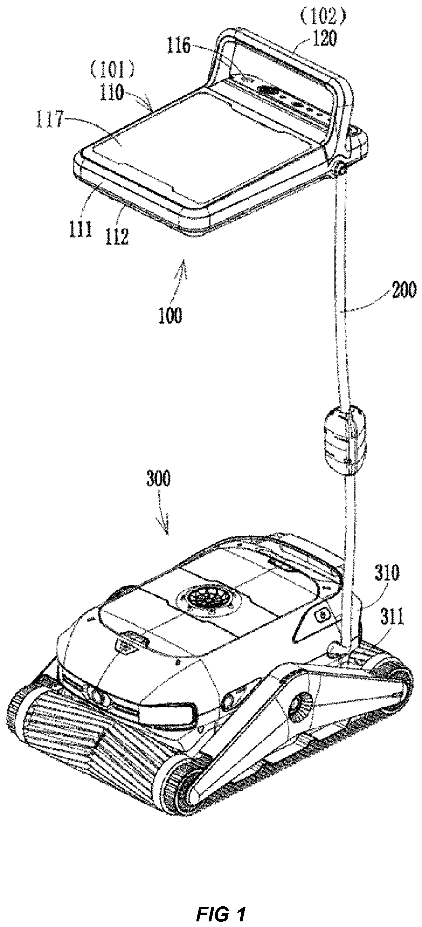

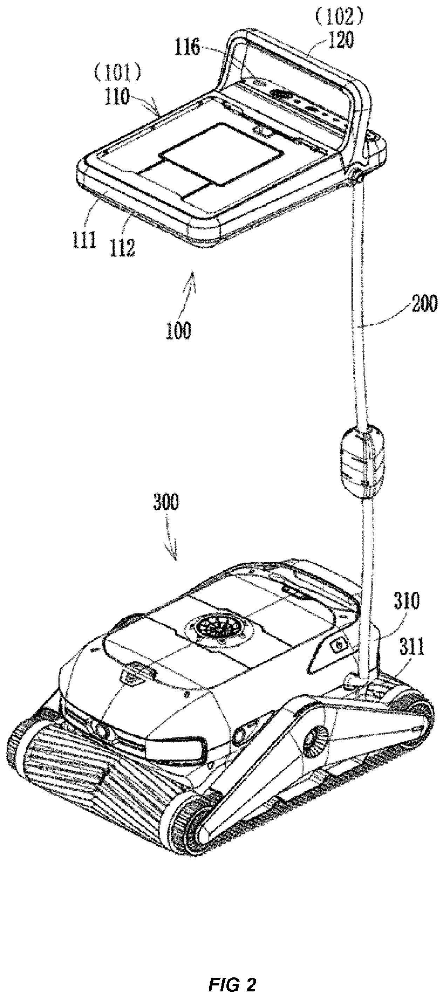

In this embodiment, as shown in Figs. 1-3, the floating device 100 includes a floating base 101 and a wireless transmission module 130, and the wireless transmission module 130 is encapsulated in the floating base 101. The wireless transmission module 130 is provided so that the floating device 100 has a wireless communication function and the floating device 100 may remotely transmit instructions to the wireless transmission module 130 during working of the swimming pool robot, by means of a remote control, etc., without the necessarily to set up redundant cables so that it would be easy to use the floating device and the swimming pool robot and the work efficiency is improved without the redundant cables to be dragged.

In this embodiment, the floating base 101 has a protruding portion 102 protruding from its upper surface, and the wireless transmission module 130 is encapsulated in the protruding portion 102. In this way, the wireless transmission module 130 is located in a higher portion relative to the floating base 101, with less surrounding interference signals, and thus the strength of transmission signals of the wireless transmission module 130 may be improved as much as possible, to ensure the effectiveness and stability of signal transmission.

In this embodiment, the floating device 100 further includes a first power supply assembly 140 which is encapsulated within the floating base 101 and electrically connected to the wireless transmission module 130 to provide electrical power thereto.

In this embodiment, the floating base 101 may be provided in a housing structure, referred as a floating housing 110, including a first upper shell 111 and a first cavity shell 113. The first cavity shell 113 is sealed and fixed to a lower surface of the first upper shell 111. The first power supply assembly 140 is disposed within a sealed cavity enclosed by the first upper shell 111 and the first cavity shell 113.

In this embodiment, the wireless transmission module 130 may be encapsulated in a top portion of the protruding portion 102 to ensure as much as possible that the wireless transmission module 130 is not blocked by other obstacles, so as to ensure the effectiveness and stability of signal transmission.

In this embodiment, the protruding portion 102 has a hollow structure at the top portion, and the wireless transmission module 130 is disposed within the hollow structure of the top portion of the protruding portion. The protruding portion adopts a U-shaped handle structure with an opening facing downwards as shown in Figs 1-3. The hollow structure is disposed in a middle connecting section of the U-shaped handle structure and is higher than the floating base 101 or the floating housing 110. The wireless transmission module 130 is provided within the hollow structure.

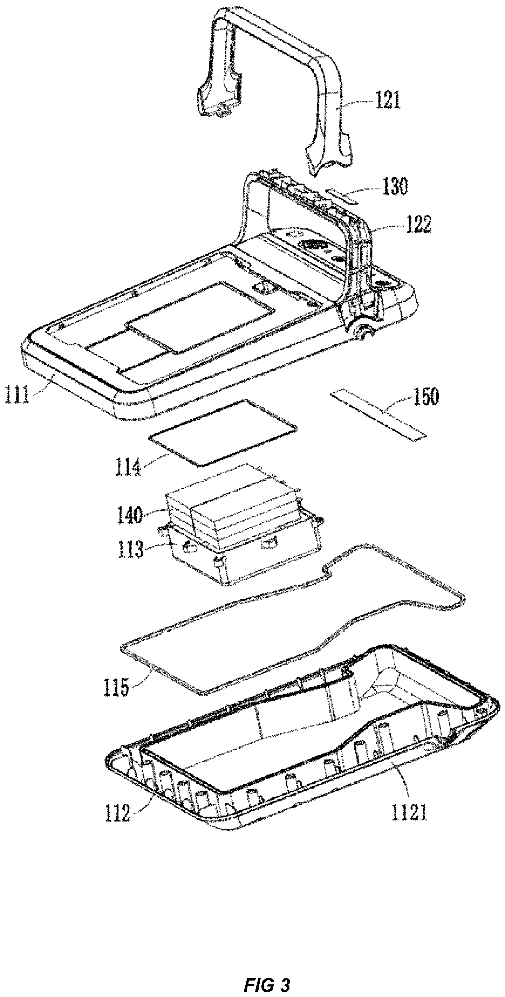

The present disclosure is illustrated exemplarily in further detail below in conjunction with Figs. 1-5. As shown in Fig. 3, the floating device 100 includes a floating housing 110 and a wireless transmission module 130. The floating housing 110 is provided with a handle 120, whose top is higher than the floating housing 110. The wireless transmission module 130 is built into the top of the handle 120.

The floating device 100 provided by this embodiment can be easily lifted by means of the handle 120. Moreover, the floating device 100 provided by this embodiment has a wireless communication function so as to remotely transmit instructions to the wireless transmission module 130 by means of a remote control, etc., to control the traveling and working state of the cleaning device 300 of the swimming pool cleaning robot, so that intelligent cleaning path planning such as cleaning path planning of a special-shaped swimming pool may be implemented, and the working position and working state of the swimming pool cleaning robot, etc. may be acknowledged in time, so that it would be easier to use the swimming pool cleaning robot and the cleaning efficiency may be improved. The wireless transmission module 130 is disposed at the top of the handle 120 and is higher than the floating housing 110, with less surrounding interference and stronger signal strength, so that the effectiveness and stability of signal transmission can be ensured.

More specifically, the wireless transmission module 130 may be a WIFI module in this embodiment. In this way, the floating device 100 can be accessed via Internet, and the swimming pool cleaning robot can be intelligently controlled through an application on a control terminal such as a mobile phone, to perform various functions including power on and off, pause and start, working mode switching, light display adjustment, and real-time display of the working state of the machine so that the robot may be smarter and more convenient to use. The working state includes working hours, remaining power, running path, location, etc.. Those skilled in the art will appreciate that the wireless transmission module 130 is not limited to WIFI, and may be Bluetooth, ZigBee, etc.

Specifically, in this embodiment, as shown in Fig. 3, the floating device 100 further includes a first power supply assembly 140, the floating housing 110 is provided with a first accommodating cavity (not shown in the Figures), and the first power supply assembly 140 is disposed in the first accommodating cavity. In this way, since the floating device 100 includes the first power supply assembly 140, there is no need to prepare a longer power supply cable before using the floating device 100 provided by this embodiment, so that the situation in which the cable is entangled during the operation of the cleaning device 300 to affect the normal working may be avoided, and the tedious work of storing the cable may be omitted. Secondly, the first power supply assembly 140 floats on the water surface with the floating housing 110 in this embodiment compared with the first power supply assembly 140 being disposed in the cleaning device 300, and the safety hazard of water ingress may be reduced when the first power supply assembly 140 is located underwater, and at the same time the cleaning device 300 may be lighter, and the operating energy consumption of the cleaning device 300 may be reduced. Providing the first accommodating cavity for accommodating the first power supply assembly 140 in the floating housing 110 further improves the protection of the first power supply assembly 140 and further reduces the safety hazard of water ingress to the first power supply assembly 140.

Specifically, the first accommodating cavity may be disposed at a central position of the floating housing 110 in this embodiment. Accordingly, the first power supply assembly 140 is correspondingly encapsulated in a central portion of the floating base 101 (floating housing 110). In this way, the center of gravity of the entire floating device 100 may be closer to its geometric center, so that the entire floating device 100 is more stable and less likely to capsize when floating on the water surface, and the safety of the first power supply assembly 140 may be improved and the potential safety hazards of the first power supply assembly 140 may be reduced.

Specifically, in this embodiment, as shown in Fig. 3, the floating housing 110 includes a first upper shell 111 and a first cavity shell 113. The first cavity shell 113 is sealed and fixed to a lower surface of the first upper shell 111, and the sealed accommodating cavity enclosed by the first cavity shell 113 and the first upper shell 111 is the first accommodating cavity. In this way, the center of gravity of the floating device 100 is relatively low, so that the floating device 100 is better in stability and less likely to capsize, which helps to ensure the safety in use.

More specifically, in this embodiment, a first sealing ring 114 may be provided between the first cavity shell 113 and the first upper shell 111 as shown in Fig. 3, which can realize waterproofing of the first accommodating cavity.

Specifically, in this embodiment, as shown in Fig. 3, the floating housing 110 further includes a frame-shaped first lower shell 112 which surrounds the first cavity shell 113 and is fixedly connected to the first upper shell 111. In this way, the first lower shell 112 and the first upper shell 111 form an annular cavity surrounding the first power supply assembly 140, so that the buoyancy around the first power supply assembly 140 may be relatively large and even, and therefore the stability of the entire floating device 100 may be improved, and the stability and safety of the first power supply assembly 140 may be further improved.

Specifically, in this embodiment, as shown in Fig. 3, the first lower shell 112 is provided with a lower recess with its inner side higher than its outer side, and the inner side of the lower recess is sealed and connected to the first upper shell 111. In this way, the contact area between the first lower shell 112 and the water is relatively large, and it would be easy for the floating device to float and not easy to sink. The volume of the annular cavity enclosed by the first lower shell 112 and the first upper shell 111 is also relatively large, to increase the buoyancy. The lower recess can store a certain amount of water even if the floating housing 110 leaks water, so that water is prevented from entering other components at higher places. The inner side of the lower recess is higher than the outer side so that the inner side may block water from penetrating in the direction of the first power supply assembly 140 effectively, and the protection of the first power supply assembly 140 may be improved and the safety hazard of water ingress to the first power supply assembly 140 may be reduced.

More specifically, in this embodiment, a second sealing ring 115 may be provided between the inner side of the lower recess and the first upper shell 111, to achieve waterproofing of the floating housing 110.

More specifically, in this embodiment, as shown in Figs. 1 and 3, the floating housing 110 is substantially in the shape of a rectangular parallelepiped, matched with the shape of the first power supply assembly 140, so that the overall stability of the floating device 100 may be improved. However, it should be noted that in other embodiments of the present disclosure, the floating housing 110 is not limited to be in the above shape, but may be in other shapes such as a column with an elliptical cross-section.

Specifically, in this embodiment, the cavity of the hollow structure provided to the handle 120 is a second accommodating cavity (not shown in the Figures) which is higher than the floating housing 110, and the wireless transmission module 130 is disposed in the second accommodating cavity. In this way, the wireless transmission module 130 is located inside the handle 120 and is protected by the outer shell of the handle 120 to be not easily damaged, to ensure normal working of the floating device. Certainly, the wireless transmission module 130 may not be disposed inside the handle 120 in other embodiments of the present disclosure. For example, the wireless transmission module 130 may be disposed outside the handle 120 alternatively as long as it is higher than the floating housing 110 to ensure signal strength.

Specifically, in this embodiment, as shown in Fig. 3, the handle 120 includes a second upper shell 121 and a second lower shell 122. The second lower shell 122 is fixedly connected to the floating housing 110, and the second upper shell 121 and the second lower shell 122 are fixedly connected to form a second accommodating cavity.

More specifically, in this embodiment, continuing as shown in Fig. 3, the handle 120 may be a U-shaped handle, and the second accommodating cavity is located in a middle connecting section of the U-shaped handle. In this way, the wireless transmission module 130 is located at the top of the U-shaped handle 120.

It should be noted here that, in this embodiment, the U-shaped handle is disposed on the top of the floating housing 110, and the wireless transmission module 130 is disposed on the top of the U-shaped handle, and thus it is convenient to carry the floating device 100 and the signal strength of the wireless transmission module 130 may be improved. However, the shape of the handle 120 is not limited to the above shape in other embodiments of the present disclosure. For example, the handle 120 may be a semicircular handle alternatively as long as it is convenient to lift the floating device 100 and convenient to provide the wireless transmission module 130 on its top, so as to ensure the signal strength of the wireless transmission module 130. There is no limitation on the specific shape of the handle 120 in the present disclosure.

Specifically, in this embodiment, the floating device 100 further includes a first main control board 150. The wireless transmission module 130 is communicatively connected to the first main control board 150, and the first main control board 150 is connected to the first power supply assembly 140. In this way, the connecting cable 200 can establish a power supply and communication connection between the floating device 100 and the cleaning device 300. A control terminal such as a remote control or a mobile phone exchanges data with the wireless transmission module 130 which exchanges data with the first main control board 150, and the cleaning device 300 is finally controlled by means of the first main control board 150.

In this embodiment, the first main control board 150 may be disposed within the floating base 101. The first main control board 150 is disposed within the floating housing 110 as shown in Fig.3.

Specifically, in this embodiment, as shown in Fig. 1, the floating housing 110 is provided with a charging port 116 configured to charge the first power supply assembly 140. In this way, the first power supply assembly 140 can be charged without being removed from the floating device 100, without the adverse effects on the sealing during the disassembly and assembly process and it is conducive to ensuring the sealing of the first accommodating cavity where the first power supply assembly 140 is located. Moreover, non-disassembly charging can further improve the work efficiency and further improve the user experience.

In this embodiment, the charging port 116 is disposed on the upper surface of the floating base 101. For example, the charging port 116 is disposed on the upper surface of the first upper shell 111 as shown in Fig. 1. In this way, the charging port 116 is located at a relatively high position to obtain good waterproof property. In addition, the charging port 116 being disposed on the upper surface of the first upper shell 111 facilitates the charging device be plugged in and out from above.

In this embodiment, the charging port 116 may be contact-type charging port or non-contact-type charging port, and certainly other modes may be used, and there is no limitation on the modes herein as long as the charging function can be realized.

When the charging port is non-contact-type charging port, the location of the charging port may be more flexible, and the charging port may also be disposed on the lower surface or side of the floating base.

Preferably, in this embodiment, a first solar panel 117 may be further provided on the upper surface of the floating housing 110. The first solar panel 117 may be electrically connected to the first power supply assembly 140. Thus, the first solar panel 117 may further charge the first power supply assembly 140. In this way, the first solar panel 117 may be used first to charge the first power supply assembly 140 in a case where the first solar panel 117 has sufficient power supply, so as to save energy; the charging port 116 is used for charging in a case where the first solar panel 117 has insufficient power supply, so as to ensure that the cleaning robot can work normally. Certainly, charging may be performed only through the charging port 116 or only the first solar panel 117 is used in other embodiments of the present disclosure.

This embodiment further provides a swimming pool cleaning robot as shown in Fig. 1, including the above floating device 100, and further including a cleaning device 300 and a connecting cable 200. The first power supply assembly 140 of the floating device 100 is connected to the cleaning device 300 via the connecting cable 200. The swimming pool cleaning robot has all the beneficial effects of the floating device described above, whose beneficial effects therefore will not be described in detail here.

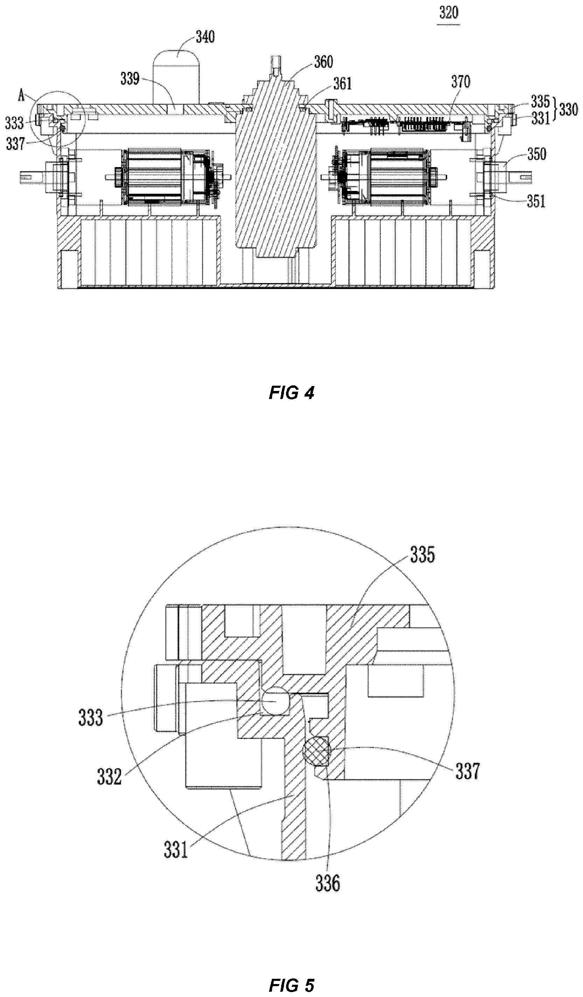

Specifically, in this embodiment, as shown in Fig. 4, the cleaning device 300 includes a cleaning housing 310 which is provided with a first cable through hole 311. A motor assembly 320 including a motor box 330 is provided in the cleaning housing 310. A travel motor 350 and a water pump motor 360 are mounted within the motor box 330, and the motor box 330 is provided with a second cable through hole 339. The connecting cable 200 passes through the first cable through hole 311 and the second cable through hole 339 and is connected to the travel motor 350 and the water pump motor 360. In this way, the cleaning housing 310 and the motor box 330 form double protection for each motor by deliberately providing the motor box 330 within the cleaning housing 310. In addition, It is easier to ensure the waterproof property of each motor with the special motor box 330 provided, compared with the cleaning housing 310 with a relatively large shape and a complex structure.

Specifically, in this embodiment, as shown in Figs. 4 and 5, the motor box 330 includes a box body 331 and a box cover 335, both of which are provided with end faces and circumferential faces that fit together. A first axial sealing ring 333 is provided between the end faces that fit together, and a first radial sealing ring 337 is provided between the circumferential faces that fit together. In this way, the box body 331 and the box cover 335 are fully sealed from both axial and radial dimensions, so that the sealing of the motor box 330 is improved.

More specifically, in this embodiment, as shown in Fig. 5, the end faces of the box body 331 and the box cover 335 that fit are provided with a first accommodating groove 332, in which the first axial sealing ring 333 is disposed. Certainly, the first accommodating groove 332 may be disposed on the end faces of the box cover 335 and the box body 331 that fit in other embodiments of the present disclosure.

More specifically, in this embodiment, as shown in Fig. 5, the circumferential faces of the box cover 335 and the box body 331 that fit are provided with a second accommodating groove 336, in which the first radial sealing ring 337 is disposed. Certainly, the second accommodating groove 336 may be disposed on the circumferential faces of the box body 331 and the box cover that fit in other embodiments of the present disclosure.

Specifically, in this embodiment, as shown in Fig. 4, a third sealing ring 351 is provided at the connection between the travel motor 350 and the box body 331, and a fourth sealing ring 361 is provided in the vertical direction at the connection between the water pump motor 360 and the box cover 335.

More specifically, in this embodiment, the sealing rings used above are O-shaped sealing rings. However, the sealing rings used in the present disclosure are not limited to the O-shaped sealing rings. In addition, the sealing rings can be made of silicone, or other materials with good sealing effects such as rubber.

Specifically, in this embodiment, as shown in Fig. 4, a fixing joint 340 configured to fix the connecting cable 200 is provided on the outer side of the second cable through hole 33. Optionally, sealant may be applied between the fixing joint 340 and the motor box 330 to improve the sealing effect.

Specifically, in this embodiment, as shown in Fig. 4, a second main control board 370 is further provided in the motor box 330. The connecting cable 200 is connected to the second main control board 370, and the travel motor 350 and the water pump motor 360 are both connected to the second main control board 370. In this way, the first main control board 150 can work together with the second main control board 370 to control the operation of each motor.

Accordingly, in this embodiment, the charging port 116 of the swimming pool cleaning robot may be contact-type charging port or non-contact-type charging port, etc., as described above for the floating device 100, and there is no limitation thereon herein.

When the charging port is non-contact-type charging port, the location of the charging port may be more flexible, and the charging port may be disposed on the lower surface or side of the floating base.

Specifically, in this embodiment, the first power supply assembly 140 may adopt a rechargeable lithium battery in the prior art, and the wireless transmission module 130, charging, remote control and other circuits may be the prior art, which will not be described in detail.

The swimming pool robot is exemplarily illustrated by the above embodiments, in which some structural features of the floating device 100 described above are exemplarily illustrated. In fact, the floating device 100 of the swimming pool robot is not limited to the structural features described above, and other structural features may be used. Another structural feature of the floating device 100 is described below, which is renamed as a floating platform 400 for the convenience of understanding.

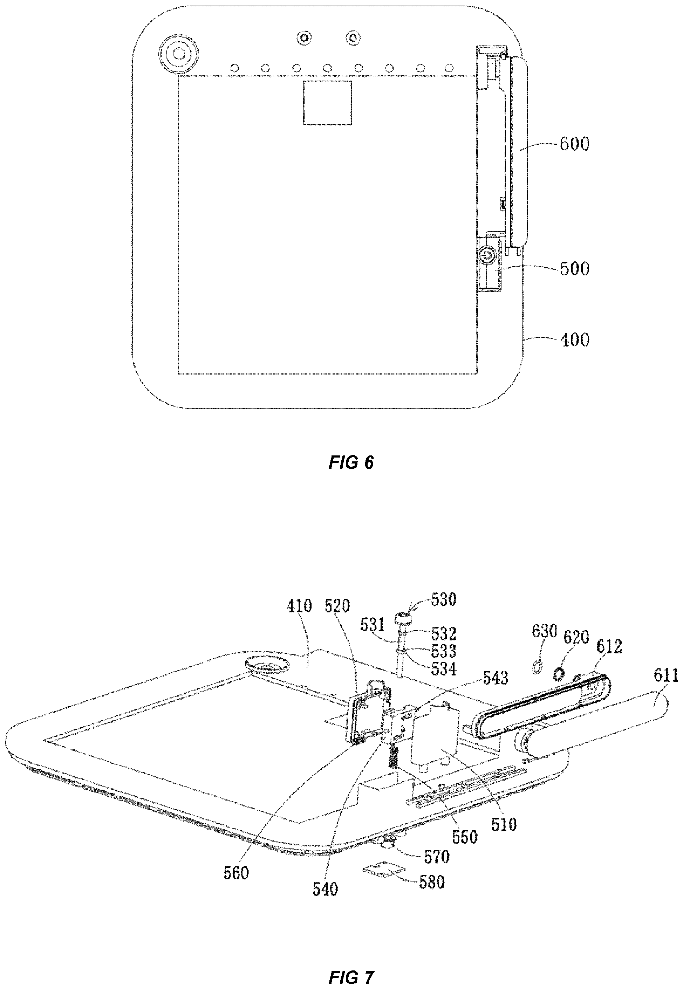

This embodiment provides a floating platform as shown in Fig. 6, including a floating body, and a switch assembly 500 and an antenna assembly 600 that are provided on the floating body. The switch assembly 500 is configured to control a working state of an electronic control system of the floating platform, and an antenna of the antenna assembly 600 is configured to enhance the strength of signals for transceiving data. The switch assembly 500 is in transmission connection with a linkage mechanism. When the switch assembly 500 is in an off-state, the linkage mechanism is connected to the antenna assembly 600 to restrict the antenna to a retracted state. The switch assembly 500 can drive the linkage mechanism to move, when the switch assembly 500 is switched to an on-state from the off-state, so as to release the restriction on the antenna.

In the floating platform provided by this embodiment, a floating body is provided with a switch assembly 500 and an antenna assembly 600. The antenna of the antenna assembly 600 can enhance the strength of signals for transceiving data, so that the stability of remote wireless signal transmission may be improved, and the normal working of the entire device may be ensured. When the switch assembly 500 is in an off-state, a linkage mechanism in transmission connection therewith can restrict the antenna to a retracted state, and the antenna is prevented from being easily damaged and broken, and the floating platform occupies a small space and is convenient for storage when the antenna is in the retracted state. When the switch assembly 500 is switched to an on-state from the off-state, the switch assembly 500 can not only control the working state of the electronic control system to initialize the electronic control system, but also release the restriction on the antenna by means of the linkage mechanism so that the linkage mechanism is detached from the antenna assembly, that is, the antenna can be unfolded without additional operations on the antenna separately, so that the function of the switch assembly 500 may be improved, and the steps for initializing the floating platform may be reduced, and the problem of the operator forgetting the starting steps may be addressed, to achieve a simple and efficient starting operation.

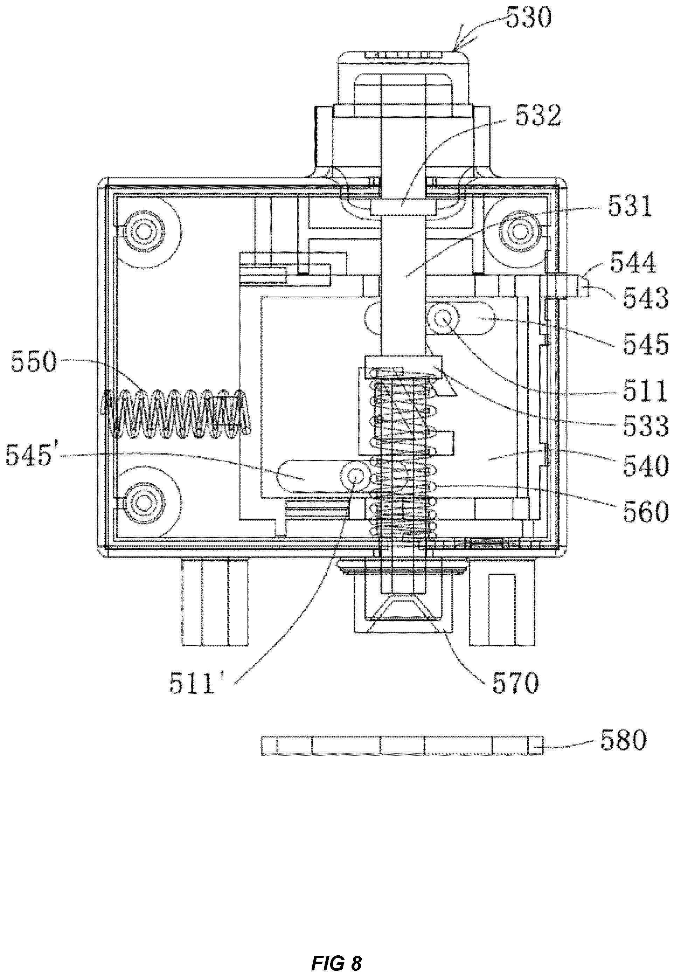

Specifically, in this embodiment, as shown in Figs. 7 and 8, the antenna assembly 600 includes an elastic member which acts between the floating body and the antenna and makes the antenna maintain a constant tendency to unfold. The linkage mechanism includes a first limit portion 543 which is configured to restrict the antenna to the retracted state. The switch assembly 500 includes a movable portion 530 provided with a movable contact, and the movable portion 530 can drive the linkage mechanism to move when the switch assembly 500 is switched to an on-state from the off-state, so that the first limit portion 543 is detached from the antenna and the antenna can be unfolded under the action of the elastic member. The first limit portion is detached from the antenna if the switch assembly is closed. In this way, the movable portion 530 is operating when the switch assembly 500 is in an on-state, and the movable contact on the movable portion 530 can initialize the electronic control system. The movable portion 530 further drives the linkage mechanism to move, to detach the first limit portion 543 from the antenna, so that the antenna is no longer restricted by the first limit portion 543 and is unfolded under the action of the elastic member.

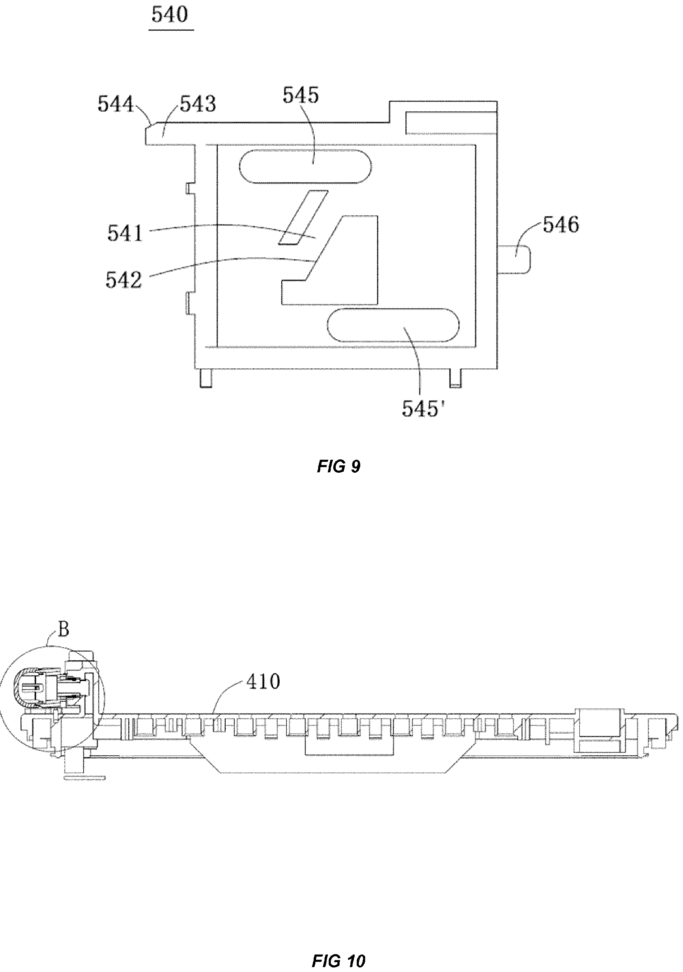

Specifically, in this embodiment, as shown in Fig. 8 and in conjunction with Fig 9, the linkage mechanism further includes a drive portion and a linkage member. The drive portion is fixedly disposed to the movable portion 530, the first limit portion 543 is fixedly disposed to the linkage member, and the linkage member has a guide surface 542. The drive portion abuts against the guide surface 542 and can move along the guide surface 542 to push the linkage member to move, when the switch assembly 500 is switched to an on-state from the off-state, so that the direction of movement of the movable portion 530 is at an angle to the direction of movement of the first limit portion 543 being detached from the antenna. In this way, with the help of the guiding effect of the guide surface 542 on the linkage member, the direction of movement of the movable portion 530 is set differently from the direction of movement of the first limit portion 543 being detached from the antenna, so that the movable portion 530 can be disposed in a position that is convenient for operation.

It should be noted that in this embodiment, the direction of movement of the movable portion 530 forms an angle with the direction of movement of the first limit portion 543. However, the direction of movement of the movable portion 530 may be consistent with the direction of movement of the first limit portion 543 in other embodiments of the present disclosure. For example, the movable portion 530 is fixedly connected to the first limit portion 543, and when the switch assembly 500 is switched to an on-state from the off-state, the direction of movement of the movable portion 530 is consistent with the direction of movement of the first limit portion 543 being detached from the antenna. In this way, the linkage mechanism has fewer parts and components as well as a simpler structure, and is easier to manufacture.

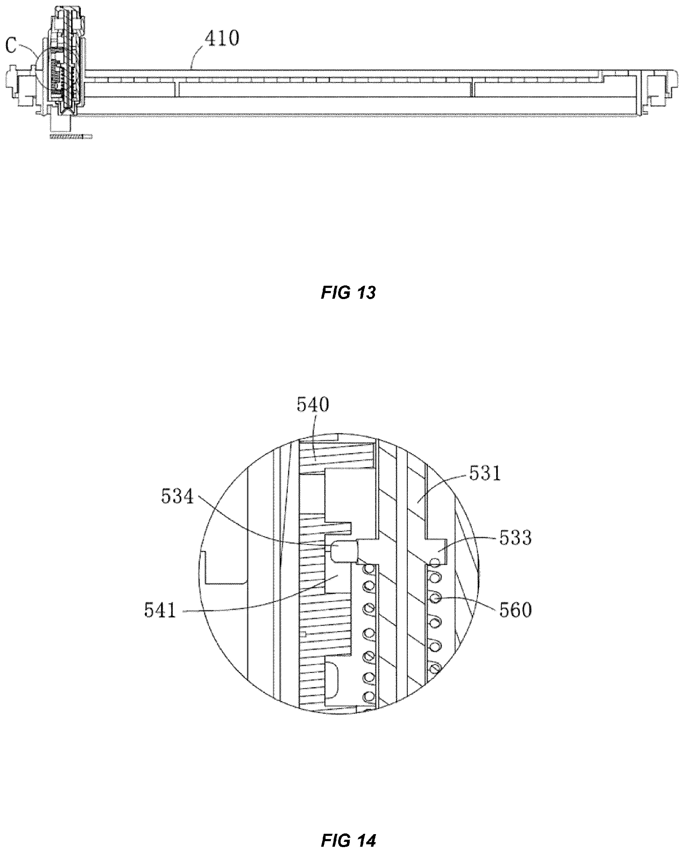

Specifically, in this embodiment, as shown in Figs. 7 and 8 and in conjunction with Figs. 9, 13 and 14, the switch assembly 500 further includes a switch box in which the movable portion 530 is provided, with an operating portion of the movable portion 530 exposed. The linkage member is a slider 540 on which the first limit portion 543 is fixedly provided. The slider 540 is disposed within the switch box and can move in the direction of movement of the first limit portion 543 being detached from the antenna. When the antenna is in the retracted state, the first limit portion 543 extends outside the switch box and is connected to the antenna. The movable portion 530 has a drive protrusion 534 protruding from its outer side wall, to form the drive portion. The slider 540 is provided with a slide groove 541 which is configured to form the guide surface 542 with a groove wall against which the drive protrusion 534 abuts. The drive protrusion 534 is disposed within the slide groove 541, and can move along the slide groove 541, when the switch assembly 500 is switched to an on-state from the off-state and push the slider 540 to move in the direction of the first limit portion 543 being detached from the antenna. In this way, the movable portion 530 is operating when the switch assembly 500 is in an on-state, and the drive protrusion 534 on the movable portion 530 moves along the slide groove 541 on the slider 540 while the movable portion 530 moves in its direction of movement, so as to push, by means of the guide surface 542 in the slide groove 541, the entire slider 540 to move, and further drive the first limit portion 543 to be detached from the antenna.

Specifically, in this embodiment, as shown in Fig. 8, the inner wall of the switch box is provided with at least one guide post, and the slider 540 is provided with at least one guide groove. The guide grooves are provided to extend in the direction of movement of the first limit portion 543, and the guide posts are inserted in correspondence with the guide grooves. In this way, the cooperation between the guide posts and the guide grooves applies a limit and guide effect on the slider 540, so that the slider 540 only moves in the direction of movement of the first limit portion 543.

More specifically, in this embodiment, as shown in Fig. 8, the inner wall of the switch box is provided with two guide posts, namely a first guide post 511 and a second guide post 511', and the slider 540 is provided with two guide grooves, namely a first guide groove 545 and a second guide groove 545'. Both the guide grooves are provided to extend in the direction of movement of the first limit portion 543. The first guide post 511 is inserted with the first guide groove 545, and the second guide post 511' is inserted with the second guide groove 545'.

More specifically, as shown in Fig. 9, the axes of the two guide grooves in the direction of length are parallel to each other and are not colinear.

It should be noted that all the set positions, numbers and corresponding relationships of the guide posts and guide grooves are not limited to the above forms in other embodiments of the present disclosure. For example, the slider 540 is provided with four guide posts, and the inner wall of the switch box is provided with two guide grooves. Both the guide grooves are provided to extend in the direction of movement of the first limit portion 543, and two of the guide posts are inserted in correspondence with one of the guide grooves. That is, the specific setting form of the guide mechanism formed by the guide posts and there is no limitation on the guide grooves in the present disclosure as long as the slider 540 can be restricted to be able to only move in the direction of movement of the first limit portion 543.

Specifically, in this embodiment, as shown in Fig. 8, the movable portion 530 is a press-type movable portion with its press position exposed above the floating body shown. The movable portion 530 can move in a vertical direction, and the first limit portion 543 can move in a horizontal direction. In this way, the press position of the movable portion 530 is relatively high, so that it is not easy for water ingress and is convenient for the operator to press the movable portion 530 downward.

It should be noted here that, in other embodiments of the present disclosure, the movable portion 530 may be a toggle-type movable portion with its toggle position exposed on the side of the floating body. The movable portion 530 can move in the vertical direction, and the first limit portion 543 can move in the horizontal direction.

It should be further noted that, in this embodiment, the direction of movement of the movable portion 530 substantially forms a right angle with the direction of movement of the slider 540, and the length of the guide grooves is provided to extend in the horizontal direction. However, in other embodiments of the present disclosure, the angle between the directions of movement of the two may be other angles alternatively. For example, the angle between the directions of movement of the two is 60°. Specifically, the length of the guide grooves may be provided to extend in a direction of 30° to the horizontal plane. Certainly, the direction of movement of the movable portion 530 may also be changed.

Specifically, in this embodiment, a chamfer 544 is further provided on an upper side of the end of the first limit portion 543 which is configured to guide the antenna when the antenna is pressed under the first limit portion 543.

Specifically, in this embodiment, as shown in Fig. 8, the linkage mechanism further includes a first reset member 550 which is disposed within the switch box, connected between the inner wall of the switch box and the slider 540, and configured to reset the slider 540 in a direction opposite to the direction of movement of the first limit portion 543 being detached from the antenna. In this way, when the first limit portion 543 is detached from the antenna, the antenna is unfolded, and the slider 540 is reset under the action of the first reset member 550 so as to retract the antenna again.

More specifically, in this embodiment, the first reset member 550 is a first compression spring which is disposed on the side of the slider 540 away from the first limit portion 543 and is axially arranged in the direction of movement of the slider 540. The first compression spring enables the slider 540 to maintain a constant tendency to move in the direction opposite to the direction of movement of the first limit portion 543 being detached from the antenna. Certainly, in other embodiments of the present disclosure, the first reset member 550 may be a first tension spring which is located on the same side of the slider 540 as the first limit portion 543 and is axially disposed in the direction of movement of the slider 540. The first tension spring enables the slider 540 to maintain a constant tendency to move in the direction opposite to the direction of movement of the first limit portion 543 being detached from the antenna.

Optionally, in this embodiment, as shown in Fig. 9, the side wall of the slider 540 may be provided with a mounting post 546. One end of the first compression spring is fixedly sleeved on the mounting post 546, and the other end abuts against the inner wall of the switch box. Certainly, in other embodiments of the present disclosure, the side wall of the slider 540 may be provided with a mounting groove which is configured to fix the end of the first compression spring. The inner wall of the switch box may be provided with a mounting post or a mounting groove or other structures for fixing the end of the first compression spring.

Specifically, in this embodiment, as shown in Fig. 8, the switch assembly 500 further includes a second reset member 560 which is disposed within the switch box, connected between the inner wall of the switch box and the movable portion 530, and configured to reset the movable portion 530 in a direction opposite to the direction of movement of the switch assembly 500 when the switch assembly 500 is switched into an on-state. In this way, when the electronic control system is initialized and the antenna is unfolded, the movable portion 530 is released and can be reset under the action of the second reset member 560.

More specifically, in this embodiment, the second reset member 560 is a second compression spring which is disposed at the end of the movable portion 530 close to the movable contact and is axially arranged in the direction of movement of the movable portion 530. The second compression spring enables the movable portion 530 to maintain a constant tendency to move in the direction opposite to the direction of movement of the switch assembly 500 when the switch assembly 500 is switched into an on-state. Certainly, in other embodiments of the present disclosure, the second reset member 560 may be a second tension spring which is disposed at the end of the movable portion 530 away from the movable contact and is axially arranged in the direction of movement of the movable portion 530. The second tension spring enables the movable portion 530 to maintain a constant tendency to move in the direction opposite to the direction of movement of the switch assembly 500 when closed.

More specifically, in this embodiment, as shown in Fig. 8 and in conjunction with Fig. 7, the movable portion 530 is rod-shaped, including a main body 531, and a first limit ring 532 and a second limit ring 533 that are provided on the main body 531 from top to bottom. When the switch assembly 500 is in the off-state, the first limit ring 532 abuts against the inner wall of the switch box. The drive protrusion 534 is disposed on the second limit ring 533, and the second compression spring is sleeved on the main body 531 and located between the second limit ring 533 and the inner wall of the switch box.

Specifically, in this embodiment, as shown in Figs. 7 and 8, the switch box includes a first front cover 510 and a first rear cover 520, which are fixedly connected and form an accommodating cavity. The movable portion 530, the first reset member 550, the slider 540, the second reset member 560, and the like are all disposed in the accommodating cavity.

In this embodiment, as shown in Fig. 7, the switch assembly 500 further includes a silicone member 570, and the electronic control system of the floating platform includes a first electronic control board 580. Both the silicone member 570 and the first electronic control board 580 are disposed on the floating body. The movable contact of the movable portion 530 moves downward, and the first electronic control board 580 is pressed by means of the silicone member 570 to initialize the electronic control system.

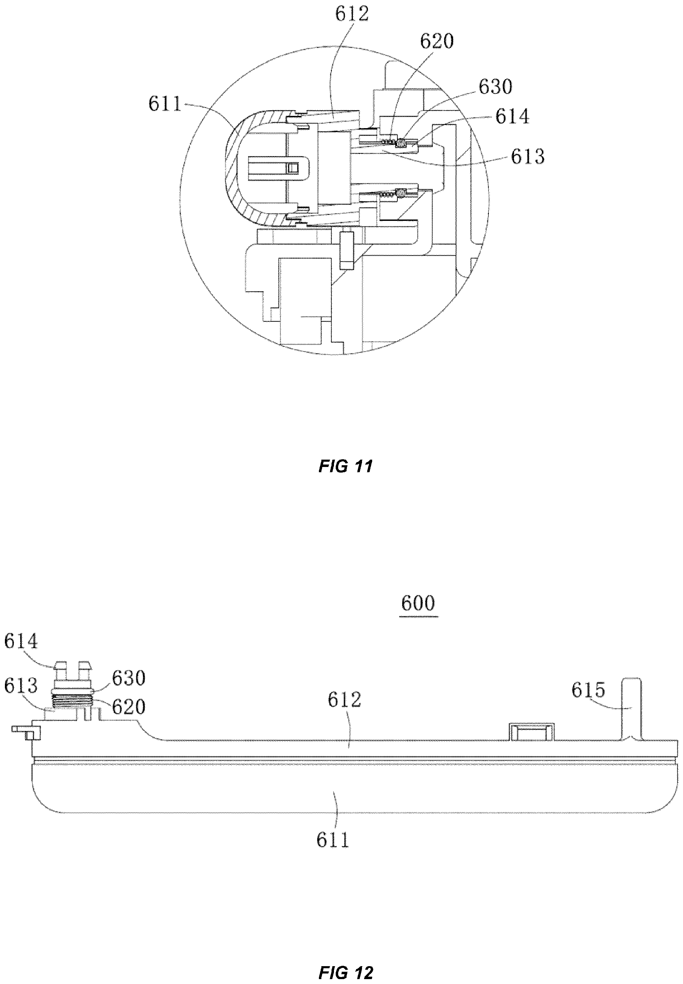

Specifically, in this embodiment, as shown in Figs. 10 and 11, the antenna is rotatably provided on the floating body, and the elastic member of the antenna assembly 600 is a torsion spring 620 which is connected between the floating body and the antenna and makes the antenna maintain a constant tendency to rotate and spring up to an unfolded state. In this way, when the first limit portion 543 is detached from the antenna, the torsion spring 620 makes the antenna rotate and spring up to a vertically unfolded state.

It should be noted here that, in other embodiments of the present disclosure, the antenna is not limited to be in the setting form described above. For example, the antenna may be telescopically mounted to the floating body, and the elastic member of the antenna assembly 600 makes a telescoping portion of the antenna maintain a constant tendency to be extended and unfolded in the vertical direction.

Specifically, in this embodiment, as shown in Fig. 12, the antenna is provided with a second limit portion 615 which cooperates with the linkage mechanism to make the antenna in a retracted state. More specifically, when the antenna is in the retracted state, the second limit portion 615 abuts against the first limit portion 543, and the first limit portion 543 limits the rotation and unfolding of the antenna by blocking the second limit portion 615.

Specifically, in this embodiment, as shown in Fig. 12, one end of the antenna in its axial direction is connected to the floating body, and the second limit portion 615 is disposed at the other end of the antenna in its axial direction. In this way, the force required for the first limit portion 543 to block the second limit portion 615 is relatively small according to the lever principle, so that the interaction force between the first limit portion 543 and the second limit portion 615 is relatively small, and both the first limit portion 543 and the second limit portion 615 are not easily damaged.

More specifically, in this embodiment, the second limit portion 615 is a stopper as shown in Fig. 12. Certainly, in other embodiments of the present disclosure, the second limit portion 615 is not limited to the above setting form. For example, the second limit portion 615 may be a limit rod, etc. as long as it can abut against the first limit portion 543 and be blocked by the first limit portion 543 to make the antenna in the retracted state. There is no limitation on the specific structural form of the second limit portion 615 in the present disclosure.

Specifically, in this embodiment, as shown in Fig. 12, a rotating shaft 613 is provided at one end of the antenna that is rotatably connected to the floating body. The torsion spring 620 is sleeved on the outside of the rotating shaft 613. A clamp 614 is provided at one end of the rotating shaft 613 away from the antenna body. The floating body is provided with a slot, and the clamp 614 is clamped in the slot of the floating body. A sealing ring 630 is further provided between the clamp 614 and the slot, so as to prevent water from entering from between the slot and the clamp 614.

Specifically, in this embodiment, as shown in Figs. 7 and 12, the antenna body includes a second front cover 611 and a second rear cover 612. A second electronic control board (not shown), i.e., the electronic control board of the antenna, is provided in a cavity enclosed by the second front cover 611 and the second rear cover 612.

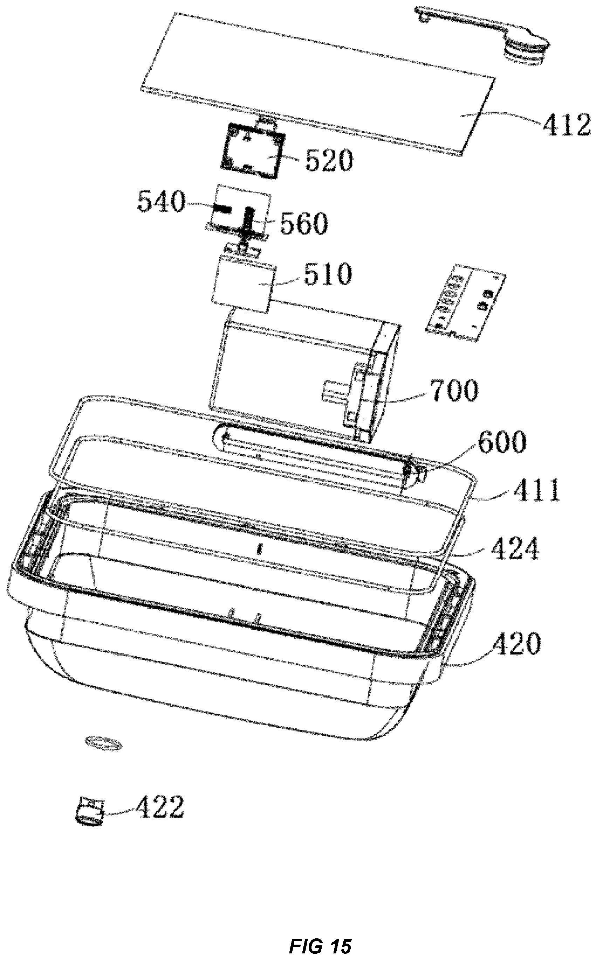

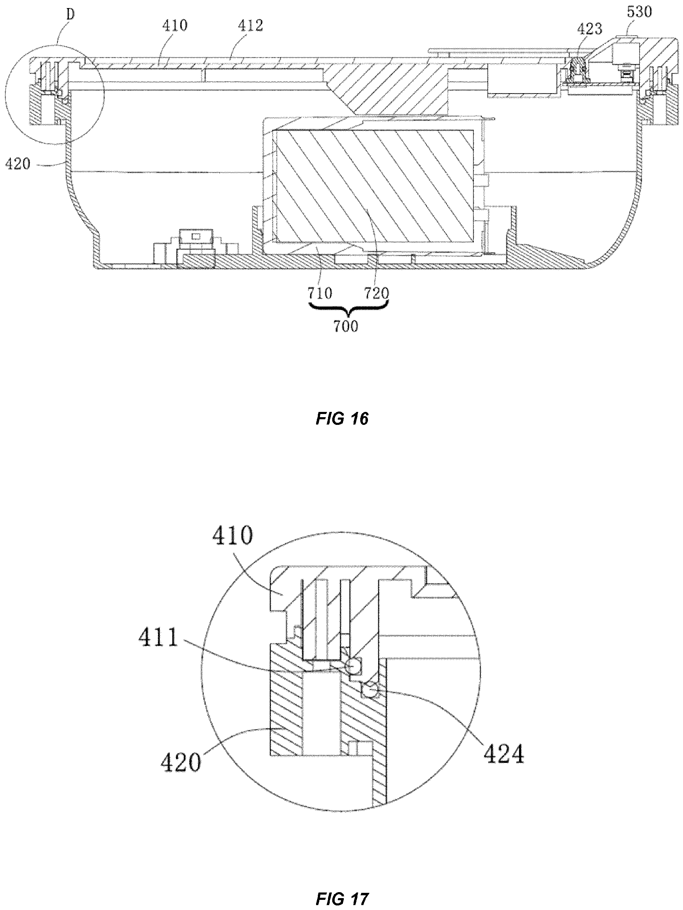

Specifically, in this embodiment, as shown in Figs. 15 and 16, the floating platform further includes a housing and a second power supply assembly 700. The second power supply assembly 700 is disposed within the housing and located at a geometric center of the bottom. In this way, the center of gravity of the entire floating platform is located at its bottom. Based on the principle that the lower the center of gravity of an object, the more stable it is, the center of gravity is the lowest when the floating platform is in a vertical state, so that the stability of the floating platform is improved. Specifically, the second power supply assembly includes a battery box 710 and a battery pack 720 encapsulated in the battery box 710.

Specifically, in this embodiment, the second power supply assembly 700 is connected to the cleaning device via a cable, and the cable connector 422 is disposed on the geometric center axis of the lower shell 420. In this way, capsizing and sinking can be effectively prevented when being pulled forward, backward, left and right by the cleaning device underwater.

Specifically, in this embodiment, the housing has an arc-shaped outer side of the bottom as shown in Figs. 15 and 16. More specifically, the housing has the outer side of the bottom similar to a hemispherical arc surface. When the floating platform tilts to one side, the fulcrum of the entire floating platform on the water surface, i.e., the contact surface between the outer side of the bottom of the housing of the floating platform and the water surface, may change. At this time, the floating platform may swing back to its original position under the action of gravity and may not capsize.

Specifically, in this embodiment, as shown in Figs. 16 and 17, the housing includes an upper cover 410 and a lower shell 420, which are fixedly buckled together. Moreover, a second radial sealing ring 411 is assembled in a lateral groove of the upper cover 410, and a second axial sealing ring 424 is assembled at a double stop of the lower shell 420. The double sealing makes the housing more waterproof.

Specifically, in this embodiment, as shown in Figs. 15 and 16, the floating platform further includes a second solar panel 412 which is disposed on the top of the floating body, connected to the second power supply assembly 700, and configured to charge the second power supply assembly 700. Preferably, the second solar panel 412 is disposed at the geometric center of the upper surface of the upper cover 410 of the floating platform. In this way, the center of gravity of the second solar panel 412 is aligned with the center of gravity of the entire floating body, so that the stability of the entire floating platform is better.

Specifically, in this embodiment, the floating platform may be further provided with a charging port which is configured to charge the second power supply assembly 700. In this way, the second solar panel 412 can be used for charging first when the second power supply assembly 700 is charged, so that energy can be saved with costs reduced, and it is possible for the floating platform to work while charging. When the second solar panel 412 is not sufficient to meet the power demand of the second power supply assembly 700, the second power supply assembly 700 can be charged through the charging port.

In this embodiment, the charging port may be specifically contact-type charging port or non-contact-type charging port, and certainly other modes may also be used, and there is no limitation thereon here as long as the charging function can be realized.

This embodiment further provides a swimming pool cleaning robot including the above floating platform. The swimming pool cleaning robot has all the advantages of the above floating platform, whose advantages therefore will not be described in detail here.

Accordingly, the charging port of the swimming pool cleaning robot may be contact-type charging port or non-contact-type charging port, etc., and there is no limitation thereon here.

Although the disclosure herein is as set forth above, the present disclosure is not limited thereto. Any skilled in the art may make various changes and modifications without departing from the spirit and scope of the present disclosure, and therefore the scope of protection of the present disclosure should be based on the scope limited by the claims.

Finally, it should be noted herein that relational terms such as "first" and "second" are merely used to distinguish one entity or operation from another entity or operation, and do not necessarily require or imply any actual relationship or order between these entities or operations. Moreover, the terms "includes", "contains" or any other variations thereof are intended to cover non-exclusive inclusion, such that a process, method, article, or device that includes a list of elements includes not only those elements but also other elements not expressly listed, or further includes elements inherent to such process, method, article, or device. Without further limitation, an element defined by the phrase "including a ..." does not exclude the existence of another identical element in the process, method, article or device including the element.

Embodiments in this specification are described in a progressive manner. Each embodiment focuses on the differences with other embodiments, and the embodiments can be referred to each other for the same and similar parts. A safety protection device for acceleration of a motion platform disclosed in embodiments is described in a relatively simple manner since it corresponds to the safety protection method for acceleration of a motion platform disclosed in the above embodiments, and reference is made to the description in the method section for relevant information.

The above description of the disclosed embodiments enables those skilled in the art to implement or use the present disclosure. Various modifications to these embodiments will be readily apparent to those skilled in the art, and the general principles defined herein may be implemented in other embodiments without departing from the spirit or scope of the present disclosure. Thus, the present disclosure will not be limited to these embodiments shown herein but is to be accorded the widest scope consistent with the principles and novel features disclosed herein.

### INDUSTRIAL APPLICABILITY

The floating device and swimming pool robot provided by the embodiments of the present disclosure have a wireless communication function so as to remotely transmit instructions to the wireless transmission module by means of a remote control, etc., to control the traveling and working state of the cleaning device of the swimming pool cleaning robot, and perform intelligent cleaning path planning such as cleaning path planning for a special-shaped swimming pool, and further acknowledge the working position and working state of the swimming pool cleaning robot, etc. in time, so that it would be easier to use the swimming pool cleaning robot and the cleaning efficiency is improved, and industrial applicability as well as significant economic benefits may be achieved.

## Claims

1. A floating device, comprising a floating base and a wireless transmission module, wherein the wireless transmission module is encapsulated in the floating base.

2. The floating device according to claim 1, wherein the floating base has a protruding portion protruding from its upper surface, and the wireless transmission module is encapsulated in the protruding portion.

3. The floating device according to claim 1 or 2, further comprising a first power supply assembly which is encapsulated within the floating base and electrically connected to the wireless transmission module.

4. The floating device according to claim 3, wherein the floating base is of a housing structure comprising a first upper shell and a first cavity shell, the first cavity shell is sealed and fixed to a lower surface of the first upper shell, and the first power supply assembly is disposed within a sealed cavity enclosed by the first upper shell and the first cavity shell.

5. The floating device according to claim 4, wherein a first sealing ring is provided between the first cavity shell and the first upper shell.

6. The floating device according to claim 4, wherein the floating base further comprises a frame-shaped first lower shell which surrounds the first cavity shell and is fixedly connected to the first upper shell.

7. The floating device according to claim 6, wherein the first lower shell is provided with a lower recess with its inner side higher than its outer side, and the inner side of the lower recess is sealed and connected to the first upper shell.

8. The floating device according to claim 7, wherein a second sealing ring is provided between the inner side of the lower recess and the first upper shell.

9. The floating device according to any of claims 3-8, wherein a first solar panel is provided on the upper surface of the floating base, the first solar panel is electrically connected to the first power supply assembly.

10. The floating device according to any of claims 2-8, wherein the floating base is provided with at least one charging port configured to charge the first power supply assembly.

11. The floating device according to claim 10, wherein the charging ports are contact-type charging port or non-contact-type charging port.

12. The floating device according to claim 10, wherein the charging ports are disposed on an upper surface of the base.

13. The floating device according to claim 11, wherein the charging ports are disposed on a lower surface of the base.

14. The floating device according to any of claims 2-13, wherein the wireless transmission module is encapsulated in a top portion of the protruding portion.

15. The floating device according to claim 14, wherein the protruding portion has a hollow structure at the top portion, and the wireless transmission module is disposed within the hollow structure of the top portion of the protruding portion.

16. The floating device according to claim 15, wherein the protruding portion comprises a second upper shell and a second lower shell fixedly connected to the second upper shell, the second lower shell is fixedly connected to the floating base, and the wireless transmission module is encapsulated within a hollow structure enclosed by the second upper shell and the second lower shell.

17. The floating device according to any of claims 2-16, wherein the protruding portion is in a U-shaped handle structure with an opening facing downwards, and the hollow structure of the protruding portion is disposed in a middle connecting section of the U-shaped handle structure.

18. The floating device according to any of claims 2-16, wherein the wireless transmission module comprises at least one of a WIFI module, a Bluetooth module, and a ZigBee module.

19. The floating device according to any of claims 3-16, further comprising a first main control board which is communicatively connected to the wireless transmission module and electrically connected to the first power supply assembly.

20. The floating device according to claim 19, wherein the first main control board is encapsulated within the floating base.

21. A swimming pool cleaning robot, comprising the floating device according to any of claims 1-19, a cleaning device, and a connecting cable, wherein a first power supply assembly of the floating device is connected to the cleaning device via the connecting cable;
the floating device comprises a floating base and a wireless transmission module, the floating base has a protruding portion protruding from its upper surface, and the wireless transmission module is encapsulated in the protruding portion.

22. A floating platform, comprising a floating body, and a switch assembly and an antenna assembly that are provided on the floating body, wherein the switch assembly is configured to control a working state of an electronic control system of the floating platform, and an antenna of the antenna assembly is configured to enhance the strength of signals for transceiving data; the switch assembly is in transmission connection with a linkage mechanism, if the switch assembly is in an off-state, the linkage mechanism being connected to the antenna assembly and configured to restrict the antenna to a retracted state; the switch assembly is configured to drive the linkage mechanism to move when being switched to an on-state from the off-state, so as to release the restriction on the antenna.

23. The floating platform according to claim 22, wherein the antenna assembly comprises an elastic member which acts between the floating body and the antenna and is configured to make the antenna maintain a constant tendency to unfold; the linkage mechanism comprises a first limit portion which is configured to restrict the antenna to the retracted state; the switch assembly comprises a movable portion provided with a movable contact, the movable portion being configured to drive the linkage mechanism to move, when the switch assembly is switched to an on-state from the off-state so that the first limit portion is detached from the antenna and the antenna is unfolded under the action of the elastic member.

24. The floating platform according to claim 23, wherein the linkage mechanism further comprises a drive portion and a linkage member, the drive portion is fixedly disposed to the movable portion, the first limit portion is fixedly disposed to the linkage member, and the linkage member has a guide surface; the drive portion is configured to abut against the guide surface and to move along the guide surface to push the linkage member to move, when the switch assembly is switched to an on-state from the off-state, so that the direction of movement of the movable portion forms an angle with the direction of movement of the first limit portion being detached from the antenna.

25. The floating platform according to claim 24, wherein the movable portion is fixedly connected to the first limit portion, and is configured to move in a direction consistent with the direction of movement of the first limit portion being detached from the antenna, when the switch assembly is switched to an on-state from the off-state.

26. The floating platform according to claim 25, wherein the switch assembly further comprises a switch box in which the movable portion is provided, with an operating portion of the movable portion exposed;
the linkage member is a slider on which the first limit portion is fixedly provided, the slider is disposed within the switch box and configured to move in the direction of movement of the first limit portion being detached from the antenna; if the antenna is in the retracted state, the first limit portion extends outside the switch box and is connected to the antenna;
the movable portion has a drive protrusion protruding from its outer side wall, to form the drive portion; the slider is provided with a slide groove which is configured to form the guide surface with a groove wall against which the drive protrusion abuts, and the drive protrusion is disposed within the slide groove and configured to move along the slide groove and push the slider to move in the direction of the first limit portion being detached from the antenna, when the switch assembly is switched to an on-state from the off-state.

27. The floating platform according to claim 26, wherein one of the switch box and the slider is provided with at least one guide post, and the other is provided with at least one guide groove, the guide grooves is provided to extend in the direction of movement of the first limit portion, and the guide posts are inserted in correspondence with the guide grooves.

28. The floating platform according to any of claims 23-27, wherein the movable portion is a press-type movable portion with its press position exposed above the floating body, the movable portion moves in a vertical direction, and the first limit portion moves in a horizontal direction.

29. The floating platform according to any of claims 23-27, wherein the movable portion is a toggle-type movable portion with its toggle position exposed on the side of the floating body, the movable portion moves in the vertical direction, and the first limit portion moves in the horizontal direction.

30. The floating platform according to any of claims 23-27, wherein the linkage mechanism further comprises a first reset member which is disposed within the switch box, connected between an inner wall of the switch box and the slider, and configured to reset the slider in a direction opposite to the direction of movement of the first limit portion being detached from the antenna.

31. The floating platform according to any of claims 23-27, wherein the switch assembly further comprises a second reset member which is disposed within the switch box, connected between the inner wall of the switch box and the movable portion, and configured to reset the movable portion in a direction opposite to the direction of movement of the switch assembly when closed.

32. The floating platform according to any of claims 22-31, wherein the antenna is rotatably provided on the floating body, and the elastic member of the antenna assembly is a torsion spring which is connected between the floating body and the antenna and configured to make the antenna maintain a constant tendency to rotate and spring up to an unfolded state.

33. The floating platform according to any of claims 22-31, wherein the antenna is provided with a second limit portion which cooperates with the linkage mechanism and is configured to make the antenna in the retracted state.

34. The floating platform according to claim 33, wherein one end of the antenna in its axial direction is connected to the floating body, and the second limit portion is disposed at the other end of the antenna in its axial direction.

35. The floating platform according to claim 33, wherein the second limit portion is a stopper.

36. The floating platform according to any of claims 22-31, wherein the antenna is telescopically mounted to the floating body, and the elastic member of the antenna assembly is configured to make a telescoping portion of the antenna maintain a constant tendency to be extended and unfolded in the vertical direction.

37. The floating platform according to any of claims 22-31, wherein the floating platform further comprises a housing and a second power supply assembly, the second power supply assembly is disposed within the housing and located at a geometric center of the bottom.

38. The floating platform according to claim 37, wherein the housing has an arc-shaped outer side of the bottom.

39. The floating platform according to claim 37, wherein the floating platform further comprises a second solar panel which is disposed on the top of the floating body, connected to the second power supply assembly, and configured to charge the second power supply assembly.

40. The floating platform according to claim 39, wherein a charging port of the second power supply assembly is contact-type charging port or non-contact-type charging port.

41. A swimming pool cleaning robot, comprising the floating platform according to any of claims 22-39.
